# EUROPEAN PATENT APPLICATION

(11) **EP 2 746 653 A1**
(43) Date of publication of application: **25.06.2014**
(21) Application number: 13198502.0
(22) Date of filing: 19.12.2013
(51) Int. Cl.: F21V 29/00, F21K 99/00, F21V 23/00, F21V 29/02

(54) **Solid-state lighting having an air passage**

(30) Priority: 20.12.2012 US 201261739773 P
(71) Applicant: Chang Wah Electromaterials Inc., N.E.P.Z., Kaohsiung City (TW)
(72) Inventor: Tsai, Wen-Kuei, 231 New Taipei City (TW)
(74) Representative: Viering, Jentschura & Partner Patent- und Rechtsanwälte

(57) **Abstract**

A solid-state lighting (100) having an air passage includes a light base (10), a main body (20), a collar (30), a first solid-state lighting module (40), at least one air passage (50), and a driving module (70). The main body (20) has a first end (201) and a second end (202). The collar (30) is arranged between the light base (10) and the first end (201) of the main body (20) and defines an air flow region (301) air communicable to the atmosphere. The first solid-state lighting module (40) is disposed on a portion of the main body (20) other than the first end (201). The air passage (50) defines a first opening (501) and second opening (502) thereon for air communication between the solid-state lighting (100) and the atmosphere. The first opening (501) is aligned with the first end (201). The second opening (502) is arranged correspondingly to be in air communication with the first end (201). The driving module (70) is arranged in the air passage (50) between the first and the second openings (501 502).

## Description

### BACKGROUND OF THE INVENTION

### 1. Field of the Invention

The instant disclosure relates to a solid-state lighting; in particular, to a solid-state lighting having an air passage.

### 2. Description of Related Art

With the rapid development of technology and the rising awareness to protect the environment, solid-state (light-emitting diodes or organic light-emitting diode) lighting inclining towards small size, power saving and long service life more commonly used for lighting purposes. Lighting efficiency continues to improve along solid-state lighting technology and has advanced the traditional incandescent light bulbs and fluorescent tubes. When higher wattage is used to enhance lighting efficiency, heat generated by the solid-state high-wattage lighting tends to affect the lighting efficiency and impair the solid-state lighting such as LED (light emitting diodes) or OLEDs (organic light emitting diodes) as well as the service life of internal electronic components.

Especially when solid-state lighting overheats, driving modules therein is prone to damage or even causes fire due to overheating.

Therefore, simultaneously improving lighting efficiency and heat dissipation of high wattage solid-state lighting has become an important objective for people skilled in this industry to resolve.

To address the above issues, the inventor strives via associated experience and research to present the instant disclosure, which can effectively improve the limitation described above.

### SUMMARY OF THE INVENTION

In order to achieve the aforementioned objects, according to an embodiment of the instant disclosure, a solid-state lighting having an air passage is provided. Through the air passage, heat generated from operating the high wattage solid-state lighting module can be effectively exhausted.

In further details, the instant disclosure provides a solid-state lighting which includes a light base, a main body, a collar, a first solid-state lighting module, at least one air passage, and at a driving module. The main body has a first end and a second end. The collar is arranged between the light base and the first end of the main body, in which the collar defines an air flow region in air communication between the solid-state lighting and the atmosphere. The first solid-state lighting module is disposed at the main body other than the first end. The air passage defines a first opening and a second opening for air communication between the solid-state lighting and the atmosphere, in which the first opening is arranged at the first end of the main body and the second opening is in air communication with the first end. The driving module is arranged in the air passage between the first and the second openings.

The instant disclosure also provides a solid-state lighting which includes a light base, a main body, a collar, a first solid-state lighting module, at least one air passage, and a driving module. The main body has a first end and a second end. The light base is arranged at the first end. The collar is arranged between the light base and the first end of the main body, in which the collar defines an air flow region in air communication between the solid-state lighting and the atmosphere. The first solid-state lighting module is disposed at the main body other than the first end. The air passage defines a first opening and a second opening for air communication between the solid-state lighting and the atmosphere, in which the first opening is arranged at the first end of the main body and the second opening is in air communication with the first end. The driving module is arranged in the air passage between the first and the second openings.

In summary, the solid-state lighting having an air passage can ventilate airflow in and out of the solid-state lighting through the air passage for rapid air-circulation within the main body. The solid-state lighting having an air passage can also effectively remove high temperature heat generated from the operation of the high wattage solid-state lighting module and driving module as well as preventing high temperature heat from affecting lighting efficiency. The above heat effects can diminish the service life of the solid-state lighting modules as well as the associated internal electronic components.

In order to further understand the instant disclosure, the following embodiments and illustrations are provided. However, the detailed description and drawings are merely illustrative of the disclosure, rather than limiting the scope being defined by the appended claims and equivalents thereof.

### BRIEF DESCRIPTION OF THE DRAWINGS

Fig. 1 is an exploded view of a solid-state lighting having an air passage according to a first embodiment of the instant disclosure;
Fig. 2 is a schematic diagram of a solid-state lighting having an air passage according to the first embodiment of the instant disclosure;
Fig. 2A is a bottom view illustrating the schematic diagram in FIG. 2 of a solid-state lighting having an air passage according to the instant disclosure;
Fig. 3 is a schematic diagram of a solid-state lighting having an air passage according to a second embodiment of the instant disclosure;
Fig. 3A is a first bottom view of the schematic diagram for a solid-state lighting having an air passage of the instant disclosure;
Fig. 3B is a second bottom view of the schematic diagram for a solid-state lighting having an air passage of the instant disclosure;
Fig. 3C is a third bottom view of the schematic diagram for a solid-state lighting having an air passage of the instant disclosure;
Fig. 4 is a schematic diagram of a solid-state lighting having an air passage according to a third embodiment of the instant disclosure;
Fig. 5 is a schematic diagram of a solid-state lighting having an air passage according to a fourth embodiment of the instant disclosure;
Fig. 6 is a schematic diagram of a solid-state lighting having an air passage according to a fifth embodiment of the instant disclosure;
Fig. 7 is a schematic diagram of a solid-state lighting having an air passage according to an sixth embodiment of the instant disclosure;
Fig. 8 is a schematic diagram of a solid-state lighting having an air passage according to an seventh embodiment of the instant disclosure;
Fig. 9 is a schematic diagram of a solid-state lighting having an air passage according to an eighth embodiment of the instant disclosure;
Fig. 10 is a schematic diagram illustrating a secondary optical assembly of the instant disclosure;
Fig. 11 is a schematic diagram illustrating another secondary optical assembly of the instant disclosure; and
Fig. 12 is a schematic diagram illustrating a printed circuit board assembly of the instant disclosure.

### DETAILED DESCRIPTION OF THE PREFERRED EMBODIMENTS

The aforementioned illustrations and detailed descriptions are exemplarities for the purpose of further explaining the scope of the instant disclosure. Other objectives and advantages related to the instant disclosure will be illustrated in the subsequent descriptions and appended drawings.

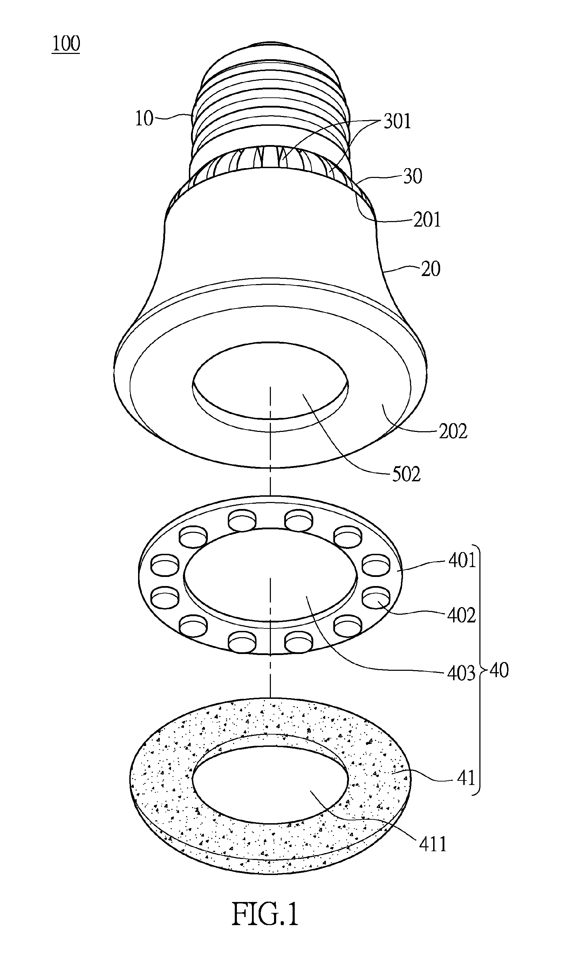

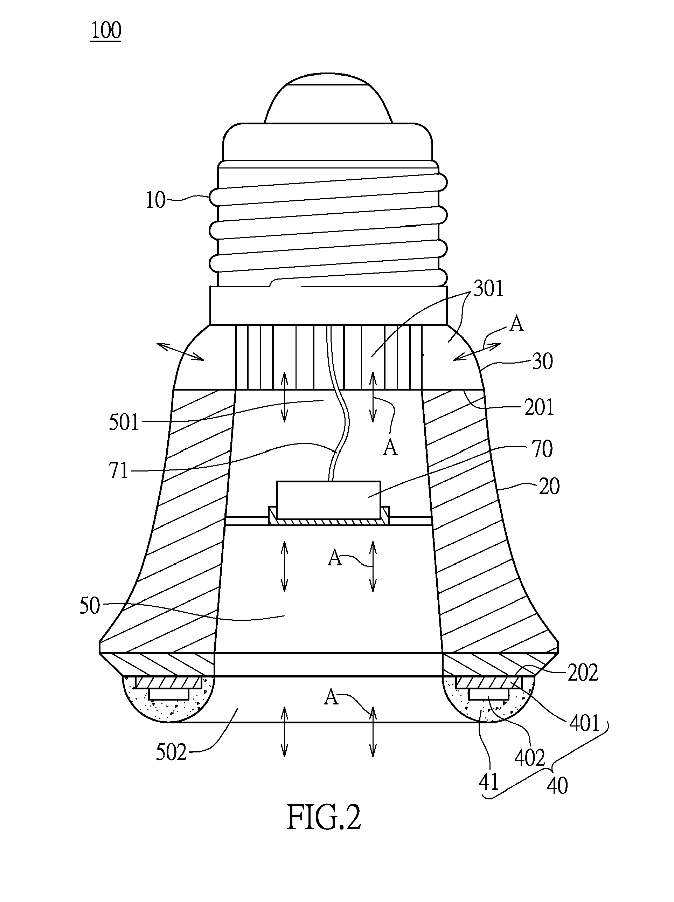

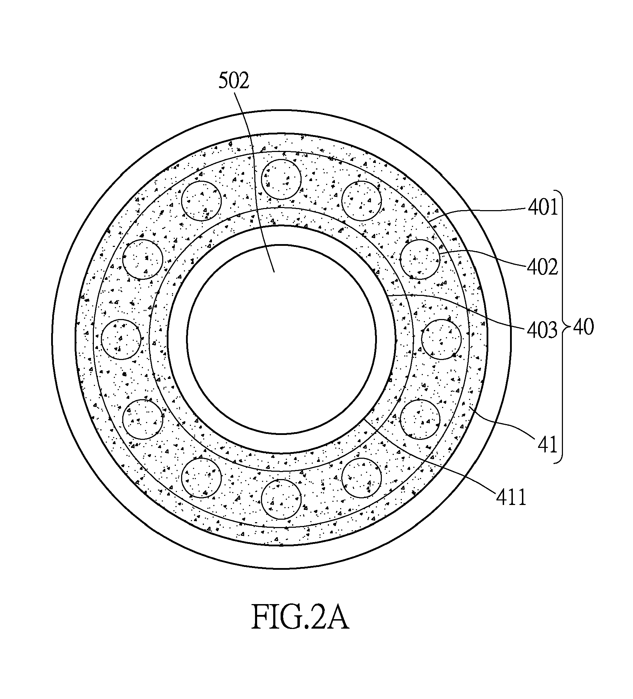

Referring to FIGS. 1 and 2, the instant embodiment discloses a solid-state lighting 100 which includes a light base 10, a main body 20, a collar 30, a first solid-state lighting module 40, an air passage 50, and a driving module 70. Moreover, the light base 10 complies with commercial standards. The main body 20 is a heat dissipating body which is made of heat conductive materials and dissipates heat via thermal conductivity, convention, and thermal radiation. The main body 20 has a first end 201 and a second end 202.

The collar 30 couples to the light base 10 and the first end 201 of the main body 20 and defines an air flow region 301 air communicable to atmosphere. Specifically, the collar 30 can be configured by a plurality of structurally networked ribs. Alternatively, the collar 30 can have a plurality of spaced thru-holes formed between the main body 20 and the light base 10. However, the collar 30 is not limited to the exemplary structure provided herein and may vary depending on the design intent. The air flow region 301 defined by the collar 30 should serve the job of allowing air in and out as well as providing sufficient structural strength between the light base 10 and the main body 20. In the instant embodiment, the collar 30 is exemplarily formed by a plurality of spaced apart ribs.

The first solid-state lighting module 40 is disposed at the main body 20 other than the first end 201. Namely, the first solid-state lighting module 40 can be disposed at the second end 202 of the main body 20 or the peripheral portions of the main body 20. Moreover, at least one LED or OLED may be applied as the first solid-state lighting module 40.

The air passage 50 has a first opening 501 and a second opening 502. The first opening 501 of the air passage 50 is arranged at the first end 201 of the main body 20 such that air communication with the air flow region 301 is provided. Furthermore, the second opening 502 of the air passage 50 is correspondingly arranged at portions other than the first end 201 of the main body 20. In other words, the second opening 502 is arranged at the second end 202 of the main body 20 or on the peripheral portion of the main body 20.

In the instant embodiment, the second opening 502 of the air passage 50 is correspondingly arranged at the second end 202 of the main body 20 and the first solid-state lighting module 40 is disposed at the second end 202 of the main body 20. In further details, the first solid-state lighting module 40 includes an annular substrate 401, a plurality of annularly configured light emitting diodes (LED) disposed on the substrate 401. The substrate 401 is formed with a substrate opening 403. The substrate opening 403 is aligned with the second opening 502 of the air passage 50 to allow air communication.

The driving module 70 is arranged in the air passage 50 between the first opening 501 and the second opening 502. Specifically, the driving module 70 is arranged proximate to a center region of the air passage 50. The driving module 70 can also include rectifiers, filters, and power converters to supply power for the first solid-state lighting module 40. However, the structure and functions of the driving module 70 are not limited to the examples provided herein. Specifically, the driving module 70 can also include a temperature sensor arranged therein for measure the operating temperature of the driving module 70. Moreover, the associated components such as circuitry and chips can be disposed on a heat conductive circuit board of the driving module 70. The driving module 70 is electrically connected to the light base 10 via an electrically conductive element 71 (such as a wire). In other embodiments, the electrically conductive element 71 can be metal contact strips, sheets, or components capable of electrical conduction such that electrical connection can be made. When the driving module 70 is in operation, air outside the solid-state lighting 100 can enter through the air passage 50 via the first and second opening 501 502 and flow along an airflow direction A towards the direction of the driving module 70, such that high temperature heat generated by the driving module 70 during operation can be removed by thermal convection in order to provide the most preferred cooling. Successively, the driving module 70 is less likely to be damaged from overheating, in turn, prolonging the usable life of the solid-state lighting 100.

Furthermore, the first solid-state lighting module 40 can further include a secondary optical assembly 41 in which the assembly 41 may include at least one secondary optical element. The secondary optical assembly 41 is used for modifying or adjusting the optical characteristics of the light emitted from the first solid-state lighting module 40. In the instant embodiment, the assembly 41 has a shape corresponding to the shape of the first solid-state lighting module 40 or the shape of the second opening 502 of the air passage. However, as long as the assembly 41 does not affect the airflow of the air passage 50, the shape of the assembly 41 is not necessary to conform to that of the second opening 502. Moreover, in the instant embodiment, the assembly 41 is an annular lens having an opening 411 which conforms to the second opening 502. However, the assembly 41 is not limited to the examples provided herein, for example: the assembly 41 can be a lamp cover, lamp cap, color temperature filter, color filter, optical components alike or the combination thereof. When air outside the solid-state lighting 100 flows along the airflow direction A, the high temperature heat generated from the first solid-state lighting module 40 can be removed.

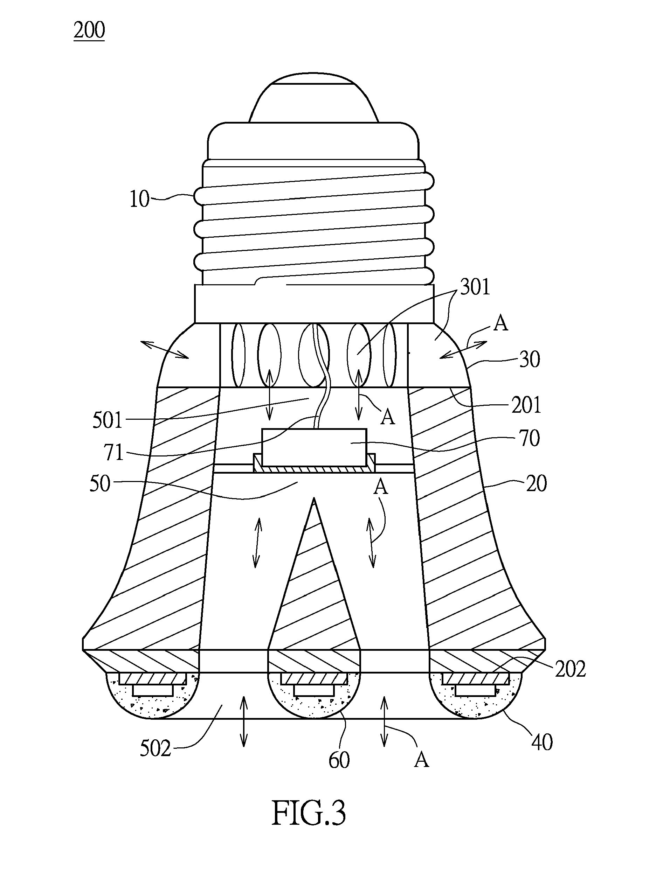

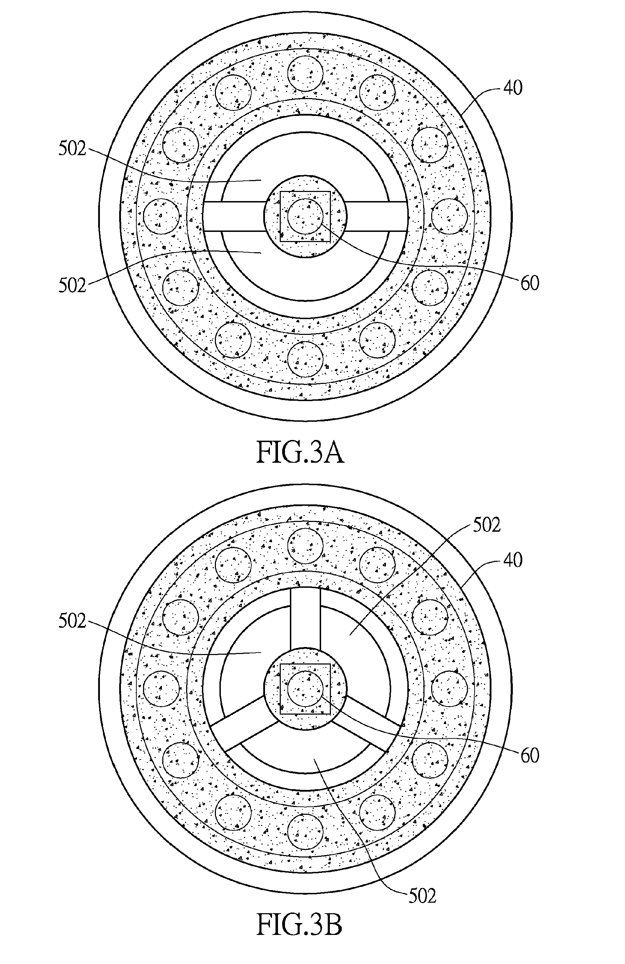

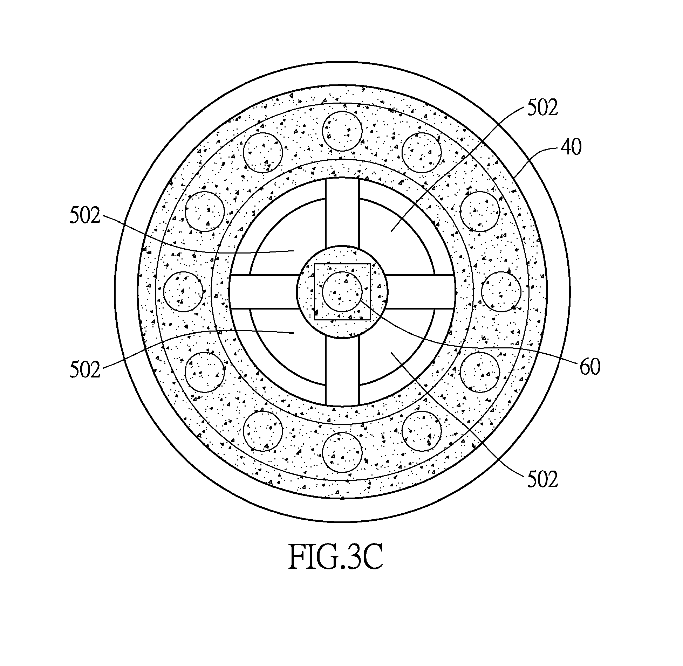

Refer to FIG. 3 as a schematic diagram of the solid-state lighting according to a second embodiment of the instant disclosure. The solid-state lighting 200 of the instant embodiment differs from the previous embodiment in that the collar 30 is formed with a plurality of spaced apart thru-holes and the air flow region 301 is defined by the contour of the collar 30. The solid-state lighting 200 further includes a second solid-state lighting module 60 disposed therein. Moreover, the second solid-state lighting module 60 is arranged in the center region of the second end 202. The air passage 50 may have an annular shaped second opening 502 (not shown in figures), two second openings 502 (as shown in FIG. 3A), three second openings 502 (as shown in FIG. 3B), or four second openings 502 (as shown in FIG. 3C). However, the quantity and shape thereof are not limited to the examples provided herein. Moreover, the driving module 70 is arranged in the air passage 50 proximate to the first opening 501. When air outside of the solid-state lighting 200 flows along the directions A, heat generated from operating the first solid-state lighting module 40, the second solid-state lighting module 60, and the driving module 70 can be exhausted, thus, dissipating heat.

In one implementation of the instant embodiment, the second solid-state lighting module 60 can be arranged in the center portion of the air passage 50 or the first opening 501 (not shown in figures). Optical elements may couple with the second solid-state lighting module 60 and the second opening 502 for adjusting the optical characteristics, such as focus focal length, color temperature, color or graphics projection and so on, of the light emitted by the second solid-state lighting module 60.

Moreover, the second solid-state lighting module 60 and the first solid-state lighting module 40 can operate independently or concurringly such that the second solid-state lighting module 60 and the first solid-state lighting module 40 can independently or concurringly emit light. Furthermore, the second solid-state lighting module 60 may have higher lumens compared to the first solid-state lighting module 40 such that when the second solid-state lighting module 60 is operating independently, a spotlight may be provided. Alternatively, when the first solid-state lighting module 40 is operating independently or concurringly with the second solid-state lighting module 60, uniform lighting or color varying lighting may be provided. In addition, the individual or concurring operation manner of the first solid-state lighting module 40 and the second solid-state lighting module 60 is via a switching component, a flash or a standard switch (not shown in figures). The switch can be wired to the solid-state lighting 200 or wirelessly connected for remote controlling.

Moreover, the driving module 70 is arranged in the air passage 50 and fixed at inner walls of the main body 20 or any light modules via fixing elements (such as a one, three or four supporting beams as shown respectively in FIGS. 3A, 3B, and 3C).

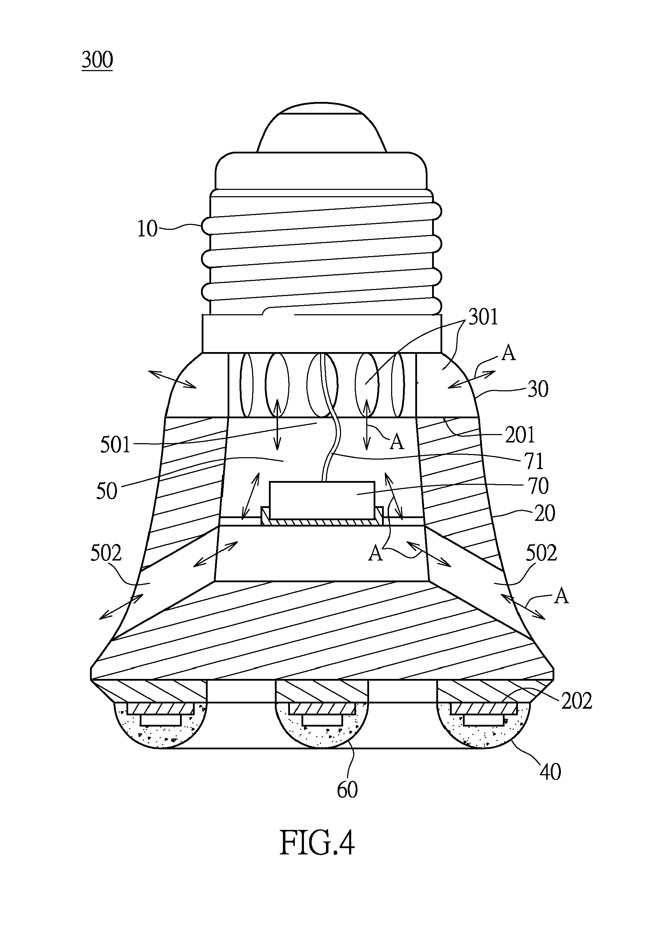

Refer to FIG. 4 as a schematic diagram according to a third embodiment of the instant disclosure. The solid-state lighting 300 of the instant disclosure differs from the previous embodiments in that the second opening 502 of the air passage is correspondingly arranged with respect to a portion of the main body 20 other than the first end 201 and the second end 202. In the instant embodiment, the second opening 502 of the air passage is correspondingly arranged with respect to the peripheral portion of the main body 20. The driving module 70 is arranged in the air passage 50 proximate to the second opening 502. In other words, the driving module 70 is arranged between the first and the second opening 501 502 while slight closer to the second opening 502. When air outside of the solid-state lighting 300 flows along directions A, heat generated from the individually or concurringly operating first solid-state lighting module 40, the second solid-state lighting module 60, and the driving module 70 can be removed, thus, dissipate heat.

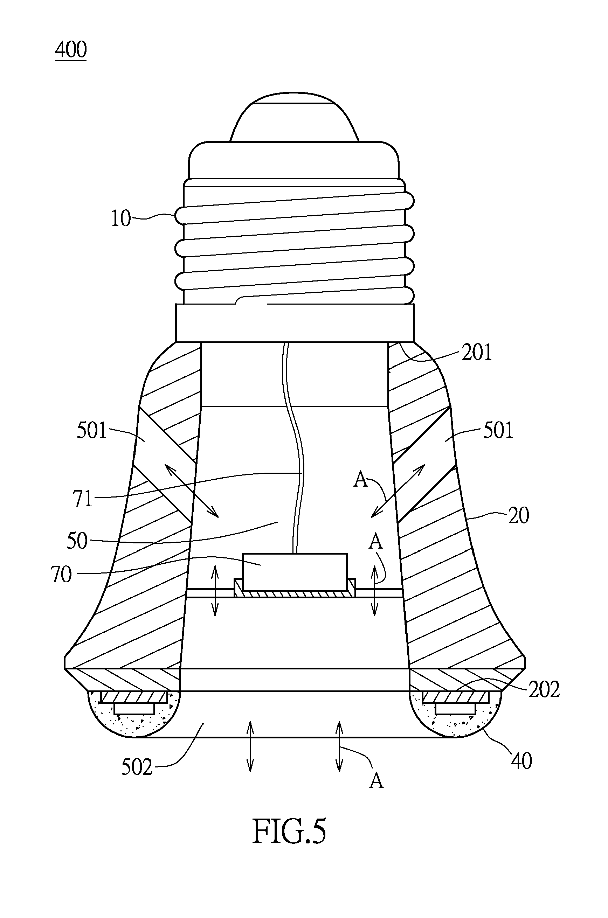

Referring to FIG. 5 as a schematic diagram according to a fourth embodiment of the instant disclosure. The instant embodiment differs from the previous embodiments in that the main body 20 of the solid-state lighting 400 includes the first end 201and the second end 202. The light base 10 is arranged at the first end 201. The air passage 50 has a first opening 501 and a second opening 502. The second opening 502 is arranged at the second opening 502 of the main body 20 and the first opening 501 is arranged at a portion of the main body 20 other than the first opening 501 and the second opening 502. In other words, the first opening 501 can be arranged at a peripheral portion of the main body 20 or the periphery of the light base 10. In the instant embodiment, the first opening 501 is arranged at the periphery portion of the main body 20. The driving module 70 is arranged in the air passage between the first and the second opening 501 502. Since the first opening 501 is arranged at peripheral portions of the main body 20, the driving module 70 is arranged in the air passage proximate to end region of the air passage 50. When the air outside of the solid-state lighting 400 flows along airflow direction A, heat generated from the operation of the first solid state lighting module 40 and the driving module 70 can be removed to provide heat dissipation.

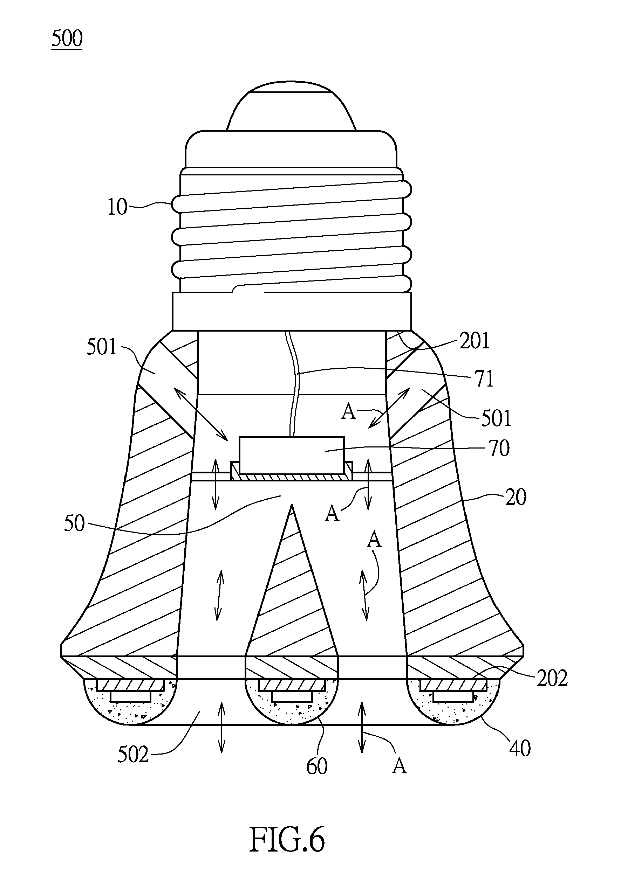

Please refer to FIG. 6 as a schematic diagram according to a fifth embodiment of the instant disclosure. The instant embodiment differs from the previous embodiments in that the solid-state lighting 500 further includes a second solid-state lighting module 60 disposed in the main body 20. The second solid-state lighting module 60 is disposed in the center region of the second opening 202. The driving module 70 is arranged in the air passage 50 proximate to the first opening 501. When the air outside of the solid-state lighting 500 flows along airflow direction A, heat generated from the individual or concurring operation of the first solid state lighting module 40, the second solid state lighting module 60, and the driving module 70 can be removed to provide heat dissipation.

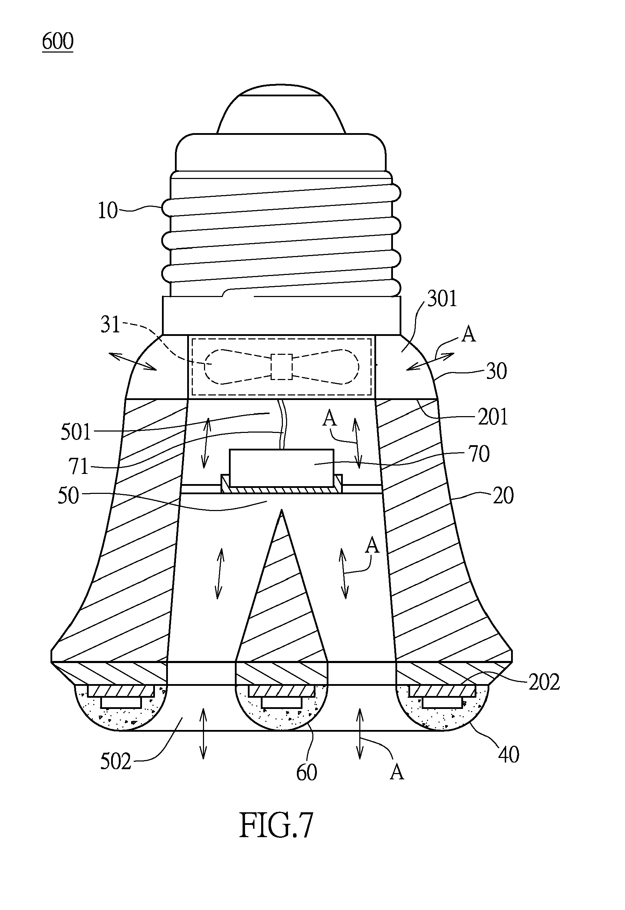

Referring to FIG. 7 as a schematic diagram according to a sixth embodiment of the instant disclosure. The instant embodiment differs from the previous embodiments in that the solid-state lighting 600 includes an active heat dissipating element 31 which is preferably a fan. The fan can be disposed in the collar 30 corresponding to the air passage 50. Via forced convection generated by the active heat dissipating element 31, air outside of the solid-state lighting 600 flows along the directions A, heat generated from the driving module 70, the individually or concurringly operating first solid state lighting module 40 and second solid state lighting module 60 can be removed and dissipated. The active heat dissipating element 31 may be disposed inside the collar 30, and may also be disposed within the air passage 50 or at the driving module 70 (not shown in figures) such that air outside of the solid-state lighting flows along directions A, and dissipates heat from the driving module 70 via increased airflow provided by the active heat dissipating element 30.

In one implementation of the instant embodiment, the solid-state lighting includes a temperature sensor (not shown in figures) which is disposed within the collar 30 or the air passage 50 and transfers detected ambient temperature data to the driving module 70. When the driving module 70 receives temperature data exceeding a predetermined threshold, converter rate can be adjusted accordingly to reduce heat generation while avoiding operation under unexpected and abnormally elevated temperature, in which abnormal temperature can reduce the life of the solid-state lighting.

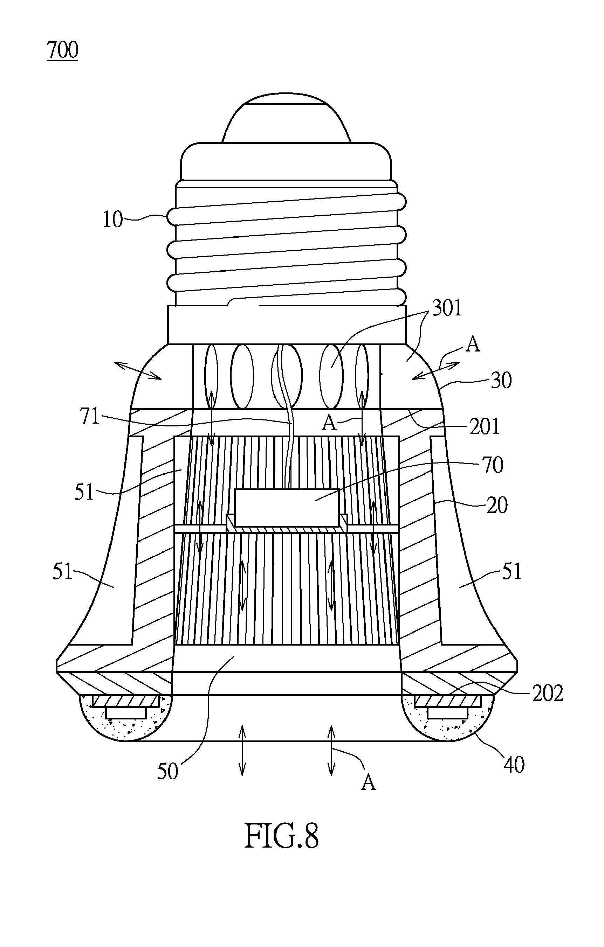

Refer to FIG. 8 as a schematic diagram according to a seventh embodiment of the instant disclosure. The instant embodiment differs from the previous embodiments in that the air passage 50 has a heat dissipating enhancement member 51 included therein. The heat dissipating enhancement member 51 includes at least one cooling fin, blade, or components alike. In the instant embodiment, the air passage 50 is equipped with the heat dissipating enhancement member 51 and the peripheral portion of the main body 20 is encompassed by the heat dissipating enhancement member 51 for auxiliary dissipation of residual heat generated from the operation of the first solid-state lighting module 40 and the driving module 70.

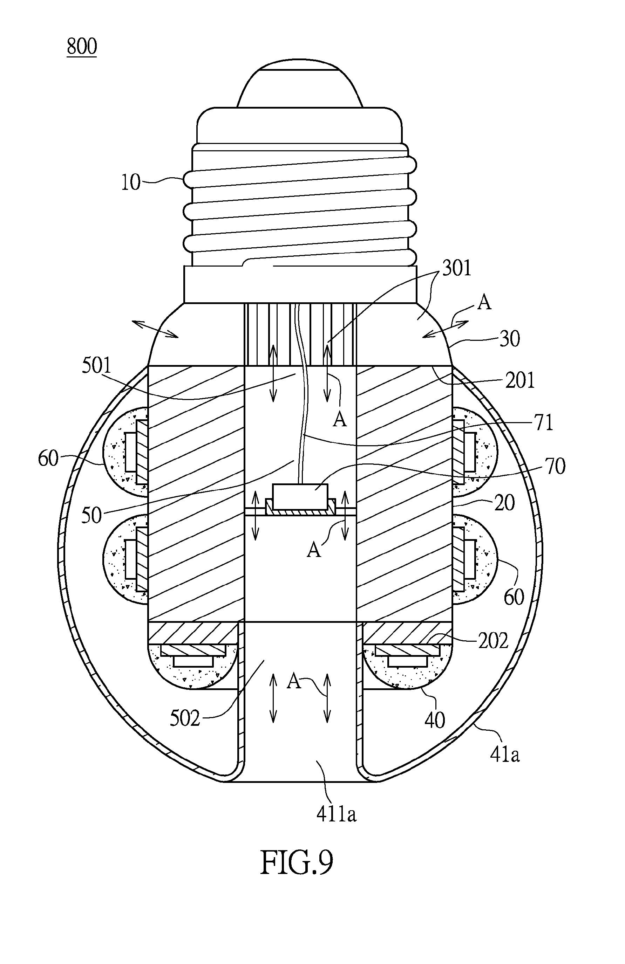

Refer to FIG. 9 as a schematic diagram according to an eighth embodiment of the instant disclosure. The solid-state lighting 800 of the instant embodiment includes the first and second solid-state lighting modules 40, 60. The first solid-state lighting module 40 is disposed on the second end 202 of the main body 20, and the second solid-state lighting module 60 is disposed on the peripheral portion of the main body 20 which can provide peripheral lighting. In addition, the driving module 70 is arranged in the air passage 50 proximate to a central region therein. Moreover, the solid-state lighting 800 of the instant disclosure further includes a secondary optical element 41a that can be a lamp cover. A center portion of the element 41a defines an opening 411 a correspondingly aligned to the second opening 502 for ventilation and removal or dissipation of heat from the working driving module 70.

In a few embodiments, the driving module 70 is arranged in the air passage 50 at the inner wall of the main body 20 such that the driving module 70 is arranged in the air passage 50 between the first and the second opening 501 502.

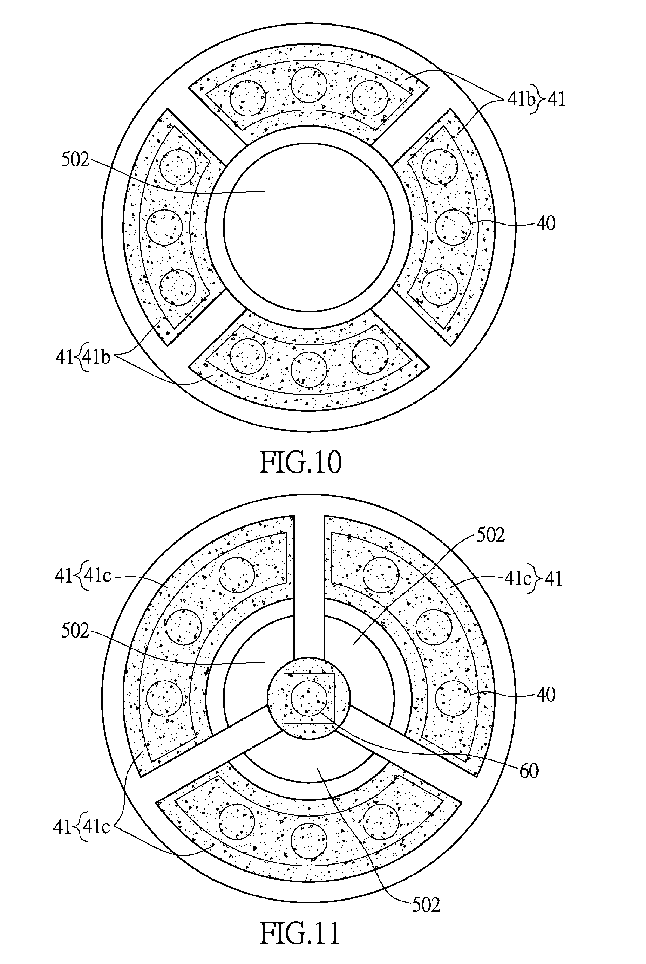

Refer to FIG. 10 as the schematic diagram of the first secondary optical assembly. The secondary optical assembly 41 of the instant embodiment includes a plurality secondary optical element 41b. In the instant embodiment, the secondary optical assembly 41 includes four secondary optical elements 41b. Notably, the four secondary optical elements 41b are not physically connected to one another. However, the spatial arrangement is substantially configured to form channels which provide air communication therethrough and facilitate airflow.

Refer to FIG. 11 as another example of the schematic diagram of the first secondary optical assembly. The secondary optical assembly 41 of the instant embodiment includes three secondary optical elements 41c. The three secondary optical elements 41b are not physically connected to one another yet having a shape corresponding to the first solid-state lighting module 40 and the second opening 502.

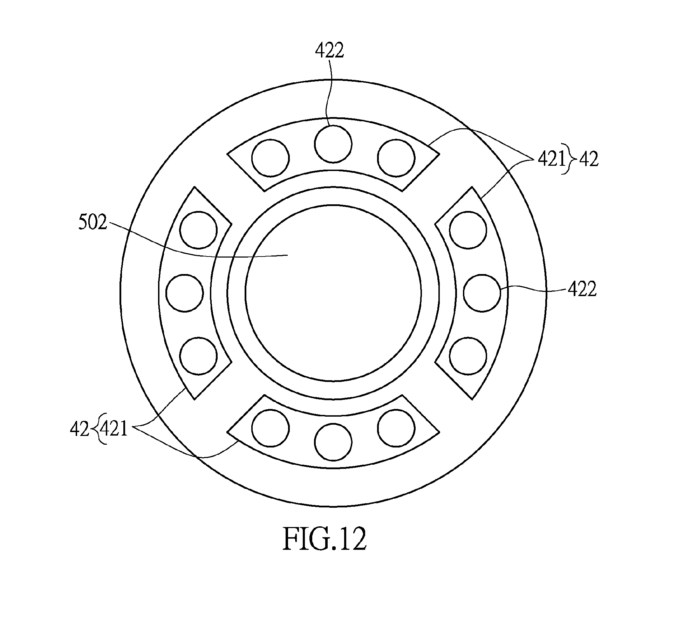

Refer to FIG. 12 as a schematic diagram illustrating a printed circuit board assembly 42 of the instant disclosure. The printed circuit board assembly 42 for retaining the solid state lighting element 422 thereon (such as LED or OLED) may include at least one printed circuit board 421. The circuit board 421 may be formed with at least one opening or the printed circuit board assembly 42 is integrally formed with at least one opening thereon. In the instant embodiment, the circuit board assembly 42 includes four circuit boards 421. Specifically, the four circuit boards 421 are not physically connected, yet essentially formed with channels therebetween to provide ventilation. In addition, the circuit board 421 may be a metal core circuit board, a ceramic substrate, a copper substrate, a thermally conductive circuit board for chip on board (COB) or a thermally conductive circuit board for lead-frame packaging board.

In summary, the solid-state lighting having an air passage in the instant disclosure can ventilate airflow in and out of the solid-state lighting through the air passage for rapid air-circulation within the main body 20, effectively remove high temperature heat generated from the operation of the high wattage solid-state lighting module and driving module, prevent heat from affecting lighting efficiency, and avoid diminishing the service life of the solid-state lighting modules as well as the associated internal electronic components.

The figures and descriptions supra set forth illustrated the preferred embodiments of the instant disclosure; however, the characteristics of the instant disclosure are by no means restricted thereto. All changes, alternations, combinations or modifications conveniently considered by those skilled in the art are deemed to be encompassed within the scope of the instant disclosure delineated by the following claims.

## Claims

1. A solid-state lighting (100) having an air passage, comprising:
a light base (10);
a main body (20) having a first end (201) and a second end (202);
a collar (30) arranged between the light base (10) and the first end (201) of the main body (20) to define an air flow region (301) in air communication with the atmosphere;
a first solid-state lighting module (40) arranged on the main body other than the first end (201);
at least one air passage (50) defining a first opening (501) and a second opening (502) for air communication between the solid-state lighting (100) and the atmosphere, the first opening (501) arranged at the first end (201) of the main body (20) and the second opening (502) being in air communication with the first end (201); and
a driving module (70) arranged in the air passage (50) between the first opening (501) and the second opening (502).

2. The lighting as recited in claim 1, wherein the driving module (70) has an electrically conductive element electrically connected to the light base (10).

3. The lighting as recited in claim 1, wherein the driving module (70) is arranged proximate to a central region of the air passage (50).

4. The lighting as recited in claim 1, wherein the driving module (70) is arranged proximate to the first opening (501) of the air passage (50).

5. The lighting as recited in claim 1, wherein the driving module (70) is arranged proximate to the second opening (502) of the air passage (50).

6. The lighting as recited in claim 1, wherein the first solid-state lighting module (40) is arranged on the second end (202) or a portion other than the first end and the second end (201 202).

7. The lighting as recited in claim 1 further comprising:
a second solid-state lighting module (60) arranged on the main body (20), the first and the second solid-state lighting module (40 60) operating independently or concurringly.

8. The lighting as recited in claim 1, wherein the second opening (502) of the air passage (50) is arranged at the second end (202) of the main body (20).

9. The lighting as recited in claim 1, wherein the second opening (502) of the air passage (50) is arranged at a portion other than first end (201) and the second end (202) of the main body (20).

10. The lighting as recited in claim 1, wherein the air passage (50) has a heat dissipating enhancement member (51) arranged therein.

11. The lighting as recited in claim 10, wherein the heat dissipating enhancement member (51) includes at least one cooling fin or cooling blade.

12. The lighting as recited in claim 1 further comprising:
an active heat dissipating element (31) correspondingly arranged with respect to the air passage (50).

13. The lighting as recited in claim 1 further comprising:
a temperature sensor correspondingly arranged with respect to the air flow region (301) or the air passage (50).

14. A solid-state lighting (100) having an air passage, comprising:
a light base (10);
a main body (20) having a first end (201) and a second end (202), the light base (10) arranged at the first end (201);
a first solid-state lighting module (40) arranged on the main body other than the first end (201);
at least one air passage (50) defining a first opening (501) and a second opening (502), the second opening (502) arranged at the second end (201) of the main body (20), and the first opening arranged a portion of the main body (20) other than the first end and the second end (201 202); and
a driving module (70) arranged in the air passage (50) between the first opening (501) and the second opening (502).

15. The lighting as recited in claim 14, wherein the driving module (70) has an electrically conductive element electrically connected to the light base (10).

16. The lighting as recited in claim 14, wherein the driving module (70) is arranged at an end portion of the air passage (50) proximate to the second opening (502).

17. The lighting as recited in claim 14, wherein the first solid-state lighting module (40) is arranged at the second end (202) or a portion other than the first end and the second end (201 202).

18. The lighting as recited in claim 14 further comprising:
a second solid-state lighting module (60), the first and the second solid-state lighting module (40 60) operating independently or concurringly.

19. The lighting as recited in claim 14, wherein the air passage (50) further includes a heat dissipating enhancement member (51).

20. The lighting as recited in claim 19, wherein the heat dissipating enhancement member (51) includes at least one cooling fin or cooling blade.

21. The lighting as recited in claim 14 further comprising an active heat dissipating element (31) correspondingly arranged with respect to the air passage (50).

22. The lighting as recited in claim 14 further comprising a temperature sensor correspondingly arranged with respect to the air passage (50).
